**Europäisches Patentamt**

**European Patent Office**

**Office européen des brevets**

(11) Publication number:  **0 133 686**
**A1**

# EUROPEAN PATENT APPLICATION

(21) Application number: **84109169.7**

(22) Date of filing: **02.08.84**

(51) Int. Cl.⁴: **C 08 F 8/38**

(30) Priority: **04.08.83 US 520357**

(43) Date of publication of application:
**06.03.85 Bulletin 85/10**

(84) Designated Contracting States:
**BE CH DE FR GB IT LI NL SE**

(71) Applicant: **The B.F. GOODRICH Company
Dept. 0015 WHB-6 500 South Main Street
Akron, Ohio 44318(US)**

(72) Inventor: **Benedikt, George Martin
12900 Lake Avenue
Lakewood Ohio 44107(US)**

(72) Inventor: **Hodge, Ion Moir
1400 Vineyard Drive
Broadview Heights Ohio 44147(US)**

(74) Representative: **von Kreisler, Alek, Dipl.-Chem. et al,
Deichmannhaus am Hauptbahnhof
D-5000 Köln 1(DE)**

(54) Chlorosulfonated polyolefin process.

(57) An improved vapor phase process for chlorosulfonating of polyethylene, particularly in a fluidized bed, is accomplished by treated a mixture of powdered polyethylene, and finely divided inorganic compounds having a specific volume conductivity greater than $10^{-3}$ $(\Omega^{-1}cm^{-1}$, such as sodium $\beta$-alumina, with chlorine and sulfur dioxide, optionally under actinic light, at an initial temperature from about 20°C to about 70°C and raising the temperature of the reaction to at least about the crystalline melting point of the polyethylene and continuing the reaction until the polyethylene contains about 25 to 45 weight percent bound chlorine and 0.5 to 3 weight percent sulfur to provide improved vulcanizable elastomers. In the fluidized bed process, improvement is obtained in bed mixing and heat transfer, with minimum polymer deposition on reactor walls and polymer agglomeration, essentially eliminating channeling and bed breakdown.

## CHLOROSULFONATED POLYOLEFIN PROCESS

## BACKGROUND OF THE INVENTION

Polyethylene elastomers are chlorosulfonated commercially by dissolving polyethylene in a solvent such as carbon tetrachloride, along with a catalyst, and bubbling chlorine and sulfur dioxide through the solution. A process that eliminates the need for the solvent is described in British Patent Specification 815,234, whereby polyethylene of a particle size not greater than 0.25 mm is chlorosulfonated in the absence of a solvent or other liquid phase, with a gaseous mixture of chlorine and sulfur dioxide at a temperature not substantially above 100°C, preferably 40-80°C. The ratio of sulfur dioxide to chlorine is a mol ratio of 1:1 and 2:1, and the resulting polymers have sulfur contents as high as 10% and chlorine contents as high as about 20% by weight. While this represents an improvement over the prior art solution methods, the resulting polymer products are not uniformly chlorosulfonated and result in poor stability, processing and other problems, as well as not providing chlorosulfonated elastomers that can be vulcanized to obtain optimum physical properties and in forms for a varity of applications.

There is described in U.S. Patent 3,258,445 an improved process that eliminates some of the processing disadvantages of the earlier solvent-free systems as described above by chlorosulfonating the polyolefin in finely divided form in the presence of quaternary ammonium salts or tertiary amines at a temperature which is above or equal to the starting temperature of the endothermal fusion phenomenon characteristic of the polymer treated. This process is conducted in two stages, in a first stage at a temperature below the lower temperature limit of the melting range of the polymer, partially chlorinating the polymer, then adding the quaternary ammonium salt or amine and raising the temperature as high as the lower temperature limit of the melting range of the polymer and adding a mixture of chlorine and sulfur dioxide. In chlorosulfonating at high temperatures, the polymer may deteriorate and the particles form small balls or adhere to the walls of the reactor. A disadvantage of this complex process is that there is a loss in thermal stability of the chlorosulfonated polyolefin containing the quaternary ammonium salts or amine. The organic additives may form toxic by-products during the reaction.

Another attempt to eliminate problems in fluid bed processes for chlorosulfonating polyethylene is described in U.S. Patent 2,928,819, wherein the use of 50% or more by weight of magnesia, aluminum sulfate, sodium chloride and the like is proposed, but the use of such large amounts of inorganic materials also introduce handling and other problems, including separation of these materials from the polymer, and are not satisfactory for a commercial process.

A major problem in fluid bed processes is electrostatic charging occurring in the fluid bed with subsequent problems in bed mixing and stability, heat transfer, and build-up of polymer deposits on wall surfaces.

## SUMMARY OF THE INVENTION

Finely divided polyolefins including polyethylene are chlorosulfonated with chlorine and sulfur di-

-3-

oxide in vapor phase in the presence of an inorganic compound inert under free radical reaction conditions and having a specific volume conductivity of ($\Omega^{-1}cm^{-1}$) value of greater than $10^{-3}$, at an initial temperature between about 20°C and 70°C and thereafter at temperature of at least about the crystalline melting point of the polyethylene and continuing the reaction to obtain a stable chlorosulfonated polyethylene elastomer containing about 25 to about 45 weight percent chlorine and 0.5 to 3 weight percent sulfur, having good processing properties and that can be readily cured to form vulcanizates useful in a variety of applications. This process is not subject to electrostatic charging in the fluid bed and is free of other problems of prior art processes.

## DETAILED DESCRIPTION

Any polyolefin can be used including low and high density, linear and branched, made by high and low pressure processes. Typical materials include polyethylene, polybutene, copolymers and the like. The preferred polyethylene used may have a molecular weight from about 20,000 to several million, preferably from 50,000 to 200,000. The melt index will range from 0.01 to less than 30, preferably from 0.2 to 18. The density may be from about 0.90 to 0.97, preferably 0.92 to 0.965, and the crystalline melting point from about 100°C to 140°C, preferably 120°C to 136°C. The average particle size will be from greater than 50, preferably greater than 75 to less than 800 microns, preferably 100 microns to less than 600 microns. For uniform chlorine content it is preferred to use polyethylene with a narrow range of average particle sizes no greater than about 200 microns, more preferably no greater than 100 microns, based on the average particle size. For example, a polyethylene with a mixture of particle sizes from 100 to 250 microns is satisfactory, as is a mixture of sizes from 500 to 600 microns, although the larger particle size may require a longer reaction time to reach the desired chlorine and sulfur content. The term polyethylene is understood to include copolymers of ethylene with other alpha olefins, preferably containing 3 to 6 carbon atoms and in amounts less than 10 weight percent, for example 5% butene-1. Other polyolefins include polypropylene and polybutene-1.

The inorganic materials used have specific volume conductivity values of greater than $10^{-3}$ to $10^{2}$ ($\Omega^{-1}cm^{-1}$) in the temperature range from 20-140°C, preferably at least about $10^{-1}$ to $10^{1}$. Typical compounds that meet these requirements are sodium -aluminas, $NaAl_{11}O_{17}$ having a conductivity of $10^{-1}$, $NaAl_7O_{11}$ and $NaAl_5O_8$; $AgAl_{11}O_{17}$; $Na_3Zr_2PSi_2O_{12}$; CeO + 12 mol % CaO; $ZrO_2$ + 12 mol % CaO; $NaGa_{11}O_{17}$, and the like. These materials preferably are inert to sulfur dioxide, chlorine and hydrogen chloride under the described reaction conditions. Inorganic materials that do not meet these criteria and are otherwise unsatisfactory in the process of this invention are silica, barium sulfate, calcium carbonate, all having a specific volume conductivity of less than $10^{-3}$.

Particularly useful is sodium $\beta$ -alumina ($NaAl_{11}O_{17}$). The amounts used will be from at least 1 to about 10 to 15 or more weight parts per 100 weight parts of polyolefin. Large amounts may be used if desired, but are not normally necessary. The number average particle size is from about 0.05 to 10, preferably about 0.2 to 1 microns. Particularly useful are particles of about 0.1 to 1.0 micron size.

The ratio of chlorine to sulfur dioxide used on a volume basis at standard temperature and pressure (25°C, 0.1 MPa) has an effect on the final composition of the polymer as to chlorine and sulfur content, and it may vary from 20:1 to 1:2, preferably 4:1 to 1:1 of chlorine to sulfur dioxide. The reaction is generally continued until the polymers contain between 25 and 45 weight percent chlorine and this is determined by the change in polymer density, the amount of HCl evolved during the chlorosulfonation, etc. The ratio may be varied during the course of the reaction, and all of the $SO_2$ may be added in the initial or later part of the reaction.

While an inert diluent gas is not necessary, inert gases such as nitrogen, carbon dioxide and the like may be used. Unreacted $SO_2$ and $Cl_2$ may be recycled, and this may include some HCl byproduct which will build up over a period of time. This normally is bled off to keep the concentration in the reactor at a concentration of less than 50%, HCl, preferably about 25% to 30%. In the process, minimum concentration of oxygen should be in the feed streams and reactor. The mamimum amount of oxygen in the reactor should be below 300 ppm, preferably below 150 ppm.

The chlorosulfonation is started at a temperature between about 20°C and 70°C, and the temperature is raised to at least about the crystalline melting point of the polyolefin. The usual operating temperature of the reaction at this stage with polyethylene, after the polyethylene contains about 15 to 25 weight percent chlorine, is about 10°C above the initial polyethylene crystalline melting point, or about 110°C to about 150°C, depending on the initial polyethylene melting point. One benchmark to use in determining at what point to raise the reaction temperature is when the polyethylene contains greater than about 20 weight percent bound chlorine.

Vapor phase bulk chlorosulfonation of polyolefin in accordance with this invention is contemplated for a variety of conditions and equipment, both batch and continuous. Any means known to those skilled in the art for vapor phase chlorosulfonation of polyolefins may be used to conduct the reaction, for example, a rotary drum, a moving bed, horizontal stirred reactor, but more preferably in a fluidized bed of the polyethylene and defined inorganic compound. The fluidized bed reaction normally is conducted at about atmospheric pressure and typically at superficial velocities of reactant gases of about 0.2 to 5 feet per second, preferably about 1 to 1.5 feet per second.

Light can be used to initiate the reaction in order to increase the rate of reaction. While light from daylight sources, incandescant bulbs and the like may be used, ultraviolet light is more efficient and this is preferably used initially in the reaction at least until the reaction temperature has reached the polyolefin melting point and may be used throughout the reaction. The reaction can also be initiated by generating free radicals thermally as by decomposition of peroxide or azo catalysts. Thermally generated chlorine radicals are also sufficient to initiate the reaction.

At the conclusion of the reaction, the polymer is removed from the reactor and the unreacted and byproduct gases must be removed as by stripping. The reaction temperature of the polymer is preferably lowered to about 80°C to 110°C, and the polymer is purged with nitrogen or stripped under vacuum to remove unreacted $SO_2$, $Cl_2$, and byproduct HCl.

In the fluidized bed process for chlorosulfonation of polyolefin mixed with the defined inorganic compounds, improvement is obtained in bed mixing of the reactants and heat transfer, with minimum polymer deposition on reactor walls and minimum agglomeration in the fluidized bed, essentially eliminating undesirable channeling and bed breakdown, to provide an improved process and product.

The resulting chlorosulfonated polyolefins contain about 25 to about 45 weight percent chlorine, with the optimum being about 35 to 38 weight percent. The sulfur, present as $SO_2Cl$, calculated as sulfur, will range from about 0.5 to 3 weight percent, which results in a vulcanizable elastomer that can be cured in many ways, including metal oxide-sulfur cures. The resulting elastomers have a 4 minute ML Mooney value at 100°C of about 15 to 150, normally about 35 to 120.

In the following examples the powdered polyethylene was blended with sodium β-alumina as described and charged to a fluid bed reactor provided with means for heating and cooling and purged with nitrogen. The reactions were started at room temperature by introducing chlorine and sulfur dioxide. The temperature of the bed was increased by heating the reactor and incoming gases. As the temperature reached the melting point of the polyolefin, the bed and reaction temperature was controlled by cooling the reactor and/or diluting the reactants with nitrogen. The end of the reaction was determined by the total uptake of chlorine required to reach the desired chlorine content. The maximum temperature is maintained near or above the melting temperature of the polyolefin to assure a reduced residual crystallinity, and at a chlorine content of about 36%, elastomeric behavior. At the end of the reaction a purge with nitrogen at about 110°C degases the polymer powder to contain less than 40 ppm of Cl, $SO_2$ and HCl, preferably less than 10 ppm. The resulting products were white or light tan.

## EXAMPLE I

70 grams of high density polyethylene powder having a density of 0.952, a crystalline melting point of 134°C by differential scanning calorimetry, a melt index of 4.3 and a particle size of 125-250 microns was dry blended with 3 parts per hundred of polyethylene of sodium $\beta$-alumina, particle size 0.42 microns (distribution 90% 0.26 - 0.53 microns) placed in a 2" diameter glass fluid bed column provided with a heating jacket through which silicon oil was circulated. The fluid bed was connected to a cyclone and further to a caustic scrubber. The fluid bed was provided on the outside with a source of UV light having the main wave-length at 356 nanometers. The powder was fluidized for 30 minutes by passing approximately 10 liters per minute of nitrogen during which time the oxygen was removed. A mixture of 13 liters per minute of chlorine having less than 100 ppm oxygen, 6 liters per minute of sulfur dioxide and 4 liters per minute of hydrogen chloride, both having less than 100 ppm oxygen was used as both fluidizing and reactive medium. The mixture was admitted into the reactor at room temperature. The temperature of the fluid bed increased rapidly and after 60 minutes was at 132°C. It was kept at 139°C for 23 additional minutes. This temperature was maintained by proper cooling and/or by temporary change of chlorine to sulfur dioxide ratio. The reaction was stopped at 83 minutes. The course of the reaction was followed by the density of powder samples extracted from the bed. Excellent axial mixing in the fluid bed and no deposits on the reactor walls was observed during the reaction. The final product was white and contained 35% chlorine and 1.1 sulfur (as sulfonyl chloride group). It was completely soluble in toluene at 50°C, (except the inorganic additive) and it has a residual crystallinity below 3%. The polymer had a Mooney value (ML 1 + 4 @ 100°C ASTM No. D1646) of 90.

## EXAMPLE II

500 grams of linear low density polyethylene powder having a density of 0.934, a crystalline melting point of 125°C (differential scanning calorimetry), a melt index of 5 and a particle size of 162-420 microns was dry blended with 15 grams of sodium $\beta$-alumina, particle size 0.42 micron and 1.25 gram of calcium stearate, and placed into a 4" diameter glass fluid bed column provided with means to introduce or take out heat in the form of vertical tubes through which water or steam was circulated. The fluid bed was connected to a cyclone and further to a caustic scrubber. The fluid bed was provided on the outside with a source of ultraviolet light having the main wavelength at 356 nanometers. The powder was fluidized for 60 minutes by passing approximately 28.3 liters per minute of nitrogen during which time the oxygen was removed. A mixture of 157 grams per minute of chlorine having less than 100 ppm of oxygen and 36.5 grams per minute of hydrogen chloride having less than 100 ppm of oxygen was used as both fluidizing and reactive medium. The mixture was admitted in the reactor at room temperature. The temperature of the fluidized powder increased within 4 minutes to 70°C and after 15 minutes heat was provided to the reactor so that in 30 minutes the temperature of the fluid bed was 115°C. Sulfur dioxide containing less than 100 ppm of oxygen was added to the initial gas mixture at the rate of 100 grams per minute. After 38 minutes the temperature was increased to 130°C and after 5 minutes the reaction was stopped. The course of the reaction was followed by the density of powder samples withdrawn from the reactor. The final product was white and contained 32.8 percent chlorine and 1.2 percent sulfur. It had a residual crystallinity of 5.8%. The polymer had a Mooney value of 70 (ML 1 + 4 at 100°C ASTM No. D1646). It was completely soluble in toluene at 50°C. A pressed sheet was clear and color-free. During the entire reaction the fluid bed showed excellent axial mixing with no deposits on the reactor wall and very good heat transfer to the cooling-heating tubes.

Samples of the chlorosulfonated polyethylene of the Examples are readily vulcanized when compounded in a recipe containing 100 weight parts of the chlorosulfonated polyethylene, 100 weight parts of a mixture of equal parts of clay, calcium carbonate and titanium dioxide, 20 weight parts of polyester plasticizer, 4 weight parts of magnesium oxide, 3 weight parts of pentaerythritol, 1 weight part of 2,2'-benzothiazyl disulfide, 1.5 weight parts of dipentamethylene thiuram hexasuldife and 1 weight part of carbowax polyethylene glycol 400, formed into standard tensile sheets and cured for 3 minutes at 397°F.

0133686

-11-

The improved chlorosulfonated polyolefins of this invention find many uses and applications that take advantage of the resistance to ozone, ultraviolet light, and resistance to deterioration by heat, chemicals and solvents. Major uses are as vulcanizates in automotive applications, wire covering, hose, tubing, and sheet goods. More specific applications include coated fabrics, ozone-proof coatings for elastomeric articles, belts, calendared fabric coatings, wire and cable covers, hose, molded goods, tank linings, pond and pit liners, roofing film, gaskets and the like.

-12-

## CLAIMS

1. In a vapor phase process for chlorosulfonating a polyolefin with chlorine and sulfur dioxide, the improvement comprising conducting the chlorosulfonation reaction in a fluidized bed of powdered polyethylene and a finely divided inorganic compound having a specific volume conductivity of greater than $10^{-3}$ ($\Omega^{-1}cm^{-1}$) at an initial reaction temperature of from about 20°C to about 70°C, raising the reaction temperature to at least about the crystalline melting point of the polyethylene and continuing the reaction until the chlorosulfonated polyethylene contains the desired bound chlorine and sulfur.

2. The process of Claim 1 wherein the polyolefin is polyethylene containing less than 10 weight percent copolymerized alpha olefins containing 3 to 6 carbon atoms, having a density from about 0.92 to about 0.97, a crystalline melting point of about 100°C to about 140°C, a melt index of 0.01 to less than 30 and a particle size from about 50 to 800 microns, the inorganic compound is sodium $\beta$-alumina present in amounts from about 1 to 15 weight parts per 100 weight parts of polyethylene, having an average particle size of about 0.05 to 10 microns, and the reaction temperature is raised to about 100°C to about 150°C to complete the chlorosulfonation of the polyethylene.

3. The process of Claim 2 wherein the polyethylene has a melt index of 0.2 to 18, a density of 0.92 to 0.96, a particle size from 100 to 600 microns and an average particle size range of 200 to 300 microns, and the volume ratio of chlorine to sulfur dioxide is from 4:1 to 1:2, and the sodium $\beta$-alumina has a

particle size of about 0.1 to 10 micron, conducted in the presence of actinic light.

4. A process of Claim 3 wherein the sodium β-alumina has a number average particle diameter of about 0.2 to 0.6 microns.

5. A process for vapor phase chlorosulfonation of polyethylene with chlorine and sulfur dioxide comprising mixing a finely divided inorganic compound that is inert to chlorine and sulfur dioxide in the defined process and has a specific volume conductivity ($\Omega^{-1}cm^{-1}$) value of at least about $10^{-1}$, with powdered polyethylene and chlorosulfonating the polyethylene at an initial temperature between about 20°C and 70°C, raising the temperature to at least about the crystalline melting point of the polyethylene and continuing the reaction to provide chlorosulfonated, vulcanizable polyethylene elastomers, containing greater than 25 weight percent to about 45 weight percent bound chlorine and about 0.5 to about 3 weight percent sulfur.

6. The process of Claim 5 wherein the chlorosulfonated reaction is conducted in a fluidized bed, the polyethylene contains less than 10 weight percent copolymerized alpha olefins containing 3 to 6 carbon atoms, has a density from about 0.91 to 0.97, a crystalline melting point of about 100°C to 140°C, a melt index of 0.01 to less than 30 and a particle size from about 50 to 800 microns, the inorganic compound present in amount from about 1 to 15 weight parts per 100 weight parts polyethylene, is sodium β-alumina having an average particle size of about 0.01 to 10 microns, the volume ratio of chlorine to sulfur dioxide is from about 20:1 to about 1:2, and the reaction temperature is raised to about 100°C to about 150°C to complete the

0133686

-14-

the chlorosulfonation of the polyethylene.

7. The process of Claim 6 wherein the polyethylene is polyethylene, has a melt index from 0.2 to 18, a particle size from 100 to 600 microns, and an average particle size range of about 200 to 300 microns, and the volume ratio of chlorine to sulfur dioxide is from about 4:1 to 1:1 under actinic light.

8. The process of Claim 7 wherein the sodium β-alumina has a particle size of about 0.2 to 0.8 microns.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 349 565 (HOECHST)<br>* claim 1; page 4, lines 6-24 *<br><br>--- | 1 | C 08 F 8/38 |
| D,A | US-A-3 258 445 (J. SCHWANDER)<br>* claim 1 *<br><br>--- | 1 | |
| D,A | US-A-2 928 819 (H. NOESKE)<br>* claim 1 *<br><br>--- | 1 | |
| E,X | EP-A-0 103 704 (GOODRICH)<br>* claim 1 *<br><br>----- | 1 | |
| | | | **TECHNICAL FIELDS SEARCHED (Int. Cl.4)** |
| | | | C 08 F 8 |

The present search report has been drawn up for all claims

| Place of search<br>THE HAGUE | Date of completion of the search<br>29-10-1984 | Examiner<br>PERMENTIER W.A. |
|---|---|---|